# EUROPEAN PATENT APPLICATION

(11) **EP 0 628 259 A1**
(43) Date of publication of application: **14.12.1994**
(21) Application number: 93904350.1
(22) Date of filing: 25.02.1993
(51) Int. Cl.: A23L 3/3409, B65B 55/14

(54) **METHOD OF MANUFACTURING PRESERVED FOOD**

(30) Priority: 27.02.1992 JP 76178/92
(71) Applicant: ONO, Takuji, Okayama-shi Okayama 700 (JP)
(72) Inventor: ONO, Takuji, Okayama-shi Okayama 700 (JP)
(74) Representative: Skone James, Robert Edmund
(86) International application number: JP9300233
(87) International publication number: WO9316610

(57) **Abstract**

A method of manufacturing preserved food, being improved in the prevention of a change in the taste and color of the food which does not permit the use of a deoxidizer therefor and which need have the softness and shape thereof retained, and having prolonged palatable period. The method consists of a packing step, an evacuating step, a gas filling and sealing step and a heat treatment step. In the packing step, food is packed in a container, such as a bag having a high gas barrier property and, in the evacuating step, the air is discharged from the container. In the subsequent gas filling and sealing step, the evacuated container is filled with an inert gas and then sealed, so that the food in the container is out of contact with oxygen owing to the container of a high gas barrier property. In the next heat treatment step, the food is heated as such, so that the sterilization effect owing to the heat applied to the food is improved.

## Description

### BACKGROUND OF THE INVENTION

### Field of the Invention:

The present invention relates to method of preserving foods, particularly method of keeping cooked foods such as boiled foods, "tempura", pork fritters or other daily fares in good condition or from decay for a long time while being marketed at normal temperature.

### Description of the Prior Art:

As for the preserving of dried foods such as peanut or of cakes such as "manjyu" or sponge cakes containers containing these foods are evacuated and filled with an inert gas, and sometimes an oxygen scavenger is added to remove oxygen in the containers.

As for "tukudani" or preserved foods boiled down in soy these foods are put in bags, which are filled with an inert gas to keep them in good condition or from decay for a long time.

Cooked foods are wrapped with gas impervious film, and then, the so wrapped foods are heated in a high-pressure steam vessel for steri lization. These ready-to-eat foods are called "retorted foods".

Oxygen scavengers, however, cannot be used in containers containing boiled foods soaked in liquid, and therefore, these foods are liable to degrade in taste or discolor, and cannot be preserved well for a long time.

As for "retorted foods" these preserved foods are kept for a long time. Vacuum evacuation of sealed packages causes the softness and pleasing shape of foods to be lost. Therefore, such foods having pleasing shape or softness cannot be "retorted".

### SUMMARY OF THE INVENTION

In view of these one object of the present invention is to provide a food preserving method which can keep foods, particularly boiled foods soaked in liquid (and hence, use of oxygen scavengers not permitted) or foods having pleasing shape and/or softness in good condition for a long time, guaranteed free of distasting or discoloration of preserved foods.

To attain this object a method of preserving foods according to the present invention comprises the steps of: putting foods in gas impermeable containers; evacuating air from the containers filled with such foods; filling the containers thus evacuated with an inert gas; and heating the containers thus filled with the inert gas.

First, foods are put in gas impermeable containers, and then, the containers are evacuated to take air away from the containers filled with such foods. At the subsequent gas-filling step the evacuated containers are filled with an inert gas, and the gas-filled containers are hermetically sealed, thus preventing the contained foods from contacting oxygen. Finally, at the heating step the gas-filled containers are heated to sterilize the contained foods.

Thus, the contained foods are prevented from being oxidized, and are sterilized. During and after sterilization the contained foods are prevented from being oxidized, and therefore, from being distasted and discolored, extending the period for which such foods are kept in good condition.

If bags are used as food containers, the filling of bags with an inert gas provides an expanded space which is larger than the size of the preserved food, leaving an extra gas-filled space other than the space which the preserved food occupies, thereby preventing the preserved food from being deformed or losing its softness.

Also, the filling of containers with an inert gas permits substantial reduction of the liquid to be added to boiled foods, accordingly reducing the total weight of the preserved food, and accordingly the cost required for transporting and delivering in the market can be reduced. Foods of the kind which requires the freezing or cooling in refrigerators, if preserved according to the present invention, can be delivered in the market at normal temperature without degrading the quality of the preserved foods, and accordingly the cost required for freezing or being kept in cold condition can be saved from the transporting or marketting cost.

### DETAILED DESCRIPTION OF PREFERRED EMBODIMENTS

The food preserving method according to the present invention is described below with reference to Examples (1) to (6).
(1) In case of lotus roots the sliced plant was weighed to be put in gas impervious bags. Then, a pH-controlling aqueous solution as heavy as one fourth of the measured weight of the plant was put in each bag. Thereafter, the bags were evacuated, and filled with nitrogen gas or carbon dioxide. The bags were hermetically sealed, and then, the so sealed bags were heated at a predetermined temperature in a heating vessel for a predetermined length of time for sterilization.
(2) In case of burdocks the chopped underground part was cooked and weighed to be put in gas impervious bags. Then, aqueous condiments as large in volume as one tenth of the weighed plant was put in each bag. Thereafter, the bags were evacuated, and filled with nitrogen gas. The bags were hermetically sealed, and then, the so sealed bags were heated at a predetermined temperature in a heating vessel for a predetermined length of time for sterilization.
(3) In case of taros the plant was treated to remove harshness therefrom, and the so treated plant was boiled and weighed to be put in gas impervious bags. Then, aqueous condiments as large in volume as one third of the weighed plant was put in each bag. Thereafter, the bags were hermetically evacuated, and filled with nitrogen gas. The bags were hermetically sealed, and then, the so sealed bags were heated at a predetermined temperature in a heating vessel for a predetermined length of time for sterilization.
(4) In case of yellowtails the sliced fish pieces were soaked in soy, and the soy-soaked fish pieces were baked to be put in gas impervious bags. Then, aqueous condiments as heavy as one tenth of the weight of the baked fish piece was put in each bag. Thereafter, the bags were evacuated, and filled with nitrogen gas. The bags were hermetically sealed, and then, the so sealed bags were heated at a predetermined temperature in a heating vessel for a predetermined length of time for sterilization.
(5) In case of pork cutlets these pieces were put in gas impervious bags. Then, the bags were evacuated, and filled with nitrogen gas. The bags were hermetically sealed, and then, the so sealed bags were heated at a predetermined temperature in a heating vessel for a predetermined length of time for sterilization.
(6) In case of shrimps the crustaceans were boiled without removing their heads to be put in gas impervious bags. Then, the bags were evacuated, and filled with nitrogen gas. The bags were hermetically sealed, and then, the so sealed bags were heated at a predetermined temperature in a heating vessel for a predetermined length of time for sterilization.

In each example the gas impervious bags containing foods were evacuated and filled with an inert gas to be hermetically sealed, and finally the bagged foods were heated for sterilization. Thus, the contained foods were prevented from being exposed to oxygen, and therefore, during and after sterilization no appreciable degradation in taste or color was recognized, and the foods were preserved well for a long time.

The filling of an inert gas in the bag will provide an additional gas-filled space other than the space occupied by the food, thus permitting the softness and pleasing shape of the food, such as taros, "tempura" or headed shrimps to remain as it was originally.

Also, the filling of an inert gas in the bag permits substantial reduction of injected aqueous solution, accordingly reducing the weight of the food-filled bag, and hence, reducing the transportation cost.

Foods of the type which requires the freezing or cooling in refrigerators, if preserved according to the present invention can be put on the market and stored at normal temperature. This has the effect of reducing the transportation and storing cost.

## Claims

1. Method of preserving foods comprising the steps of:
putting foods in gas impermeable containers;
evacuating air from the containers filled with such foods;
filling the containers thus evacuated with an inert gas; and
heating the containers thus filled with the inert gas.

2. Method of preserving foods according to claim 1 wherein said inert gas is selected among nitrogen gas, carbon dioxide and other gases not acting chemically with said foods.
